# EUROPEAN PATENT APPLICATION

(11) **EP 4 332 918 A1**
(43) Date of publication of application: **06.03.2024**
(21) Application number: 22306271.2
(22) Date of filing: 29.08.2022
(51) Int. Cl.: G06V 40/40, G06V 10/82, G06V 10/00

(54) **SYSTEM FOR LIVENESS DETERMINATION USING SEVERAL MODELS**

(71) Applicant: THALES DIS FRANCE SAS, 92190 Meudon (FR)
(72) Inventor: MATKOWSKI, Wojciech Michal, 648160 Singapore (SG); DANG, Thi Tra Giang, 550240 Singapore (SG); LIANTO, Januar, 544819 Singapore (SG)
(74) Representative: Quintero Romero, Manuel

(57) **Abstract**

The invention provides a system for determining liveness of a target person comprising a frame capture module (101), a face detection module (102) and a frame quality module (103) configured to determine at least one quality feature from each frame. A quality filtering module (104) is configured to reject or accept each frame based on a comparison between a predefined capture condition and a first quality feature. A first scoring module (105) is arranged, and to determine a first score based on the detected face of a frame, if it is accepted. A second scoring module (106) is arranged to determine a second score based on at least one second quality feature extracted from a frame, if it is accepted. A fusion module (107) is configured for attributing a final score representative of liveness of the target person based on the first and second scores.

## Description

This invention is related to the field of face detection, and more particularly, to face liveness determination, which aims at determining whether a face is real, or live, from a target person at a point of capture, or spoof/fake.

More and more applications and services now rely on a prior step of face recognition to ensure that a user is authorized to use the service/application

This is the case for example in the domain of telecommunications, when unlocking a phone for example, when accessing to a physical place, for example in airports, in biometric systems for identity verification or in digital identification, for example for banking services.

In the above mentioned services, face recognition is becoming one of the preferred biometric modality.

Once the face of a user is captured, image frames are generally processed and compared with stored images labelled with user identities, so as to infer the identity of a user.

To access services/applications of the genuine person, attackers may implement Presentation Attacks, noted PAs hereafter. PAs may consist in presenting face spoof to the recognition system.

PAs may be static such as printing a face on paper, or wearing a 2D or 3D mask, or may be dynamic such as replay attacks replaying a video of the genuine person on digital device such as a Smartphone.

To counteract these PAs, liveness determination methods have been developed and are applied prior to face recognition, to ensure that the genuine person that is subjected to recognition is real and live, and not spoof.

Some liveness determination methods or systems are called active, where they require the target subject to perform a series of one or several instructions, requesting some type of cooperative behaviour, such as blinking of the eyes, mouth/lip movement and/or turning of the head.

However, active methods/systems have the drawback to be obtrusive, which is a problem in security applications where a target subject needs to be recognized without noticing it.

In contrast, passive liveness determination do not require any subject cooperation, so are unobtrusive, and processes images or frames that are acquired by a capture device, such as a camera.

Some prior art solutions are based on machine learning principles to train models to detect whether the target person is live or spoof. However, these solutions fail to be adapted to different types of PAs, are unable to detect new types of PAs and/or are highly dependent on the quality of the video frames that are input.

Indeed, many types of PAs exist, including photo or video of a genuine person displayed on some medium device, or more complicated attacks such as high quality replicated face masks and heads. In addition, PAs are continuously improved by attackers, so there is a need to have a liveness determination method that applies to a broad range of PAs, and even better, to unknown PAs.

The invention aims at improving the situation

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a system for determining liveness of a target person comprising
- a frame capture module configured to acquire a series of frames ;
- a face detection module configured to detect a face of a target person in each of the frames of the series acquired by the frame capture module;
- a frame quality module configured to determine at least one quality feature from each frame of the series acquired by the frame capture module ;
- a quality filtering module configured to reject or accept each frame of the series based on a comparison between at least one predefined capture condition and at least a first quality feature among the at least one quality feature of the frame extracted by the frame quality module ;
- a first scoring module arranged to receive as input a detected face of a target person in a frame, if said frame is accepted by the quality filtering module, and to determine a first score based on the detected face of the target person;
- a second scoring module arranged to receive as input the at least one quality feature extracted from a frame, if said frame is accepted by the quality filtering module, and to determine a second score based on at least one second quality feature among the at least one quality feature of the frame extracted by the frame quality module ;
- a fusion module configured for attributing a final score representative of liveness of the target person based at least on the first score and the second score.

The system according to the invention allows to detect several types of PAs by using two scoring modules in parallel, each of the scoring module having its own processing to attribute a score. The scores are then merged to obtain a final score. In addition, the quality filtering module allows to reject frames that do not satisfy predefined capture conditions, which enable the scoring modules to be specifically built to process high quality images, thereby improving the determination of liveness while using a passive method.

According to some embodiments, the first scoring module may comprise a first convolutional neuronal network arranged to determine at least one spatial feature of the detected face received as input, and the first score may be determined based on the determined spatial feature.

Therefore, the first scoring module is able to determine a spatial feature based on a CNN. The spatial feature can then be passed to a classifier or compared to a threshold to determine the first score. The use of a CNN applied to high resolution frames that have been filtered by the quality filtering module enables to reduce the liveness determination errors.

In complement, the at least one spatial feature comprises a depth map of the detected face received as input, and wherein the first score is determined based on the determined depth map.

The use of a depth map applied to high resolution frames filtered by the quality filtering module enables to reduce the liveness determination errors.

Still in complement, the at least one spatial feature may further comprise a light reflection feature and/or a skin texture feature, and the first score may be further determined based on the light reflection feature and/or the skin texture feature.

This enables to increase the number of types of PAs that can be detected by the first scoring module. It can for example learn to differentiate between live skin texture and other display medium and materials in 2D or 3D, such as paper, latex, other silicon, resins, etc.

Alternatively or in complement, the first scoring module may be further arranged to determine at least one temporal feature of the detected face in at least two consecutive frames, and the first score may be determined based on the determined spatial feature and based on the determined temporal feature.

This enables to increase the number of types of PAs that can be detected by the first scoring module. It can learn micro-movements such as a remote PhotoPlethysmoGraphy (rPPG) signal from a sequence of frames with specific intervals.

According to some embodiments, the at least one predefined capture condition may comprise an image sharpness threshold, a gray scale density threshold, a face visibility threshold and/or a light exposure threshold.

This enables to accept high quality frames, thereby reducing the risks of the first and second scoring modules to make liveness determination errors.

According to some embodiments, the second scoring module may comprise a classifier arranged to determine the second score based on second quality features comprising a natural skin color, a face posture, eyes contact, frame border detection and/or light reflection.

Therefore, the second quality features may differ from the first quality features, which are used for filtering. The first quality features can therefore be dedicated to obtaining high quality frames, whereas the second quality features are used for detection liveness of the target person. The second scoring module is therefore complementary from the first scoring module, and these modules target different types of PAs.

According to some embodiments, the face detection module, the frame quality module and the quality filtering module may be comprised in a first device, the first device may be arranged to communicate with the first and second scoring modules via a network.

Therefore, the frames can be filtered by the first device before being passed to the first and second scoring modules, thereby optimizing the use of the network.

In complement, the quality filtering module may be arranged to provide feedback information based on the comparison between the at least one predefined capture condition and the at least one quality feature of the frame extracted by the frame quality module.

This enables to increase the number of frames in the series that are accepted by the quality filtering module. It therefore improves the accuracy of liveness determination.

Alternatively or in complement, the quality filtering module may be arranged to control the frame capture module based on the comparison between the at least one predefined capture condition and the at least one first quality feature of the frame extracted by the frame quality module.

This enables to automatically improve the quality of the frames that are acquired by the frame capture module. It therefore improves the accuracy of liveness determination.

According to some embodiments, the first score may be determined for each frame and the second score may be determined for each frame, the final score may be determined based on the first scores and the second scores determined for the frames of the series accepted by the quality filtering module.

This enables to obtain a final score for the whole series of frames.

Alternatively, the first score may be determined based on the detected face of the target person in the frames of the series accepted by the quality filtering module, the second score may be determined based on the second quality features of the frames of the series accepted by the quality filtering module.

This is an alternative for obtaining a final score for the whole series of frames. It simplifies the processing performed by the fusion module.

A second aspect of the invention concerns a method for determining liveness of a target person comprising the following operations:
- acquiring a series of frames ;
- detecting a face of a target person in each of the frames of the series acquired;
- determining at least one quality feature from each frame of the series ;
- rejecting or accepting each frame of the series based on a comparison between at least one predefined capture condition and at least a first quality feature among the at least one quality feature of the frame extracted by the frame quality module ;
- applying at least one first model to a detected face of a target person in a frame, if said frame is accepted by the quality filtering module, to determine a first score based on the detected face of the target person;
- applying a second model to the at least one quality feature extracted from a frame, if said frame is accepted by the quality filtering module, to determine a second score based on at least one second quality feature among the at least one quality feature of the frame extracted by the frame quality module ;
- applying a fusion model to the first score and the second score to attribute a final score representative of liveness of the target person.

According to a first embodiment, during a preliminary phase, the method comprises:
- setting the fusion model;
- defining a decision function determining, based on a threshold and the first score, a decision indicating whether a target person in a series of frame is spoof or live; then
- setting a value for the threshold; then
- selecting the second model among several candidates based on frames for which the decision function wrongly determines that the target person is live and to minimize an error value of the second model; then
- updating the value of the threshold based on several candidates to minimize at least one error value of the fusion model.

This enables to have a second model that is specifically trained for detecting attacks that cannot be detected by the first model, thereby enlarging the scope of types of PAs that can be detected by the method.

According to a second embodiment, during a preliminary phase, the first model may be obtained by machine learning, and the second model and the fusion model may be selected among several candidates based on the first model and based on accuracy metrics.

This enables to reduce the determination errors performed by the method.

### Brief description of the drawings:

[Fig. 1] shows a system for liveness determination of a target person according to some embodiments of the invention;
[Fig. 2] a module of a system for liveness determination of a target person according to some embodiments of the invention;
[Fig. 3] is a flowchart showing the steps of a method according to some embodiments of the invention;
[Fig. 4a] shows the sub-steps performed by a first scoring module of system for determining liveness of a target person, according to some embodiments of the invention;
[Fig. 4b] shows the sub-steps performed by a first scoring module of system for determining liveness of a target person, according to other embodiments of the invention.

### Detailed description

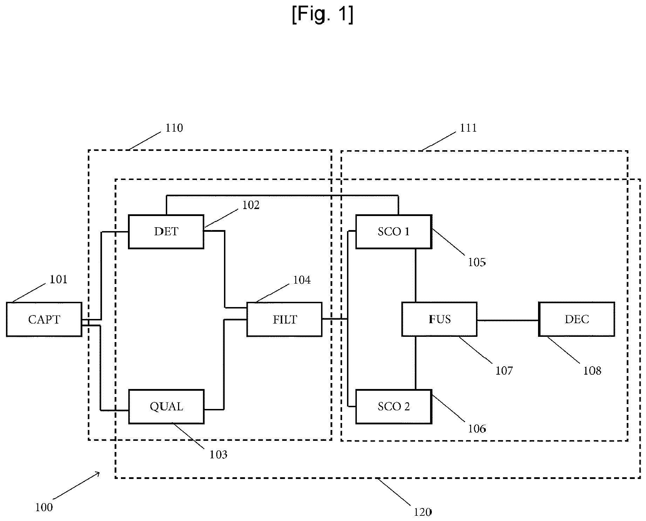

Figure 1 shows a system for liveness determination of a target person according to some embodiments of the invention.

The system comprises a frame capture module 101 such as a camera or a video camera, arranged to acquire a series of frames, which can be static frames or video frames. No restriction is attached to the technology associated with the camera, which is preferably arranged to acquire digital video frames. To this end, the frame capture module 101 comprises at least some optics and a sensor, and may comprise an internal memory and some processing capabilities to pre-process the frames that are acquired. For example, the camera 101 may be a single channel Red Green Blue camera, able to acquire RGB frames.

The frame capture module 101 is arranged to acquire frames representing a scene in a field of view of the frame capture module 101, the field of view being static or dynamic. The quality of the frames that are acquired depends on the sensitivity and the format of the sensor, the ambient luminosity, velocity of the target person, settings of the camera, such as aperture, exposure time and focal length.

The frame capture module 101 is installed at an end user site, which can be at a building entrance, in front of a door, at a security gate of an airport or any other physical location.

No restriction is attached to the number of frames in the series of frames or the time period between each frame. For example, at least 24 frames per second may be acquired when the frame capture module 101 is a video camera. The series may be a sequence of frames having a duration of one or several seconds for example.

The system 100 further comprises a face detection module 102 configured to detect a face of a target person in each of the frames of the series acquired by the frame capture module. The face detection module 102 may be able to identify a zone where the face of the target person is detected or may crop the frame so that it is centred and zoomed in the detected face. Methods for detecting a face in a frame are well known and are not further described in the present description.

The system 100 further comprises a frame quality module 103 configured to determine at least one quality feature from each frame of the series acquired by the frame capture module 101.

Preferably, the frame quality module 103 determines several quality features, which may comprise any, or any combination, of the following: lighting/exposure, frame sharpness, head pose of the target person, skin color naturalness, face visibility of the target person, size of a zone comprising the face of the target person, eyes contact of the target person, gray scale density or other quality features. More generally, a quality feature encompasses any feature that is representative of the quality of the frame, in particular of a zone comprising the face of the target person, and its capacity to allow the analysis of the face of the target person.

The system further comprises a quality filtering module 104 configured to reject or accept each frame of the series based on a comparison between at least one predefined capture condition and at least one first quality feature among the at least one quality feature of the frame extracted by the frame quality module. The at least one first quality feature may be an exposure, an image sharpness, a gray scale density or a face visibility. No restriction is attached to the predefined capture condition, which may be an image sharpness threshold, a face visibility threshold, a gray scale density threshold and/or a light exposure threshold. Therefore, based on these thresholds, a frame may be rejected if its first quality features are below one or several of the above thresholds. For example, the visibility of the face in the frame may be lower than the face visibility threshold. Conversely, the frame can be accepted if the visibility of the face in the frame (first quality feature) is higher than or equal to the face visibility threshold. Alternatively, when several capture conditions are predefined, a frame can be rejected if some of the thresholds are not reached by the first quality features. For example, if three capture conditions (three thresholds) are predefined, the frame is rejected if at least two first quality features are below their two respective thresholds.

This enables to discard or reject frames that do not provide a minimum level of quality. The rejected frames are not passed to the other modules of the system 100, which can therefore be specifically adapted to process high quality frames, without the risk to lead to detection errors when the quality of the frames acquired by the frame capture module is low 101.

The quality filtering module 104 implements a simple set of rules, defining which frames to reject or accept based on the comparison between the predefined capture conditions and at least one first quality feature among the quality features determined by the frame quality module 103. The quality filtering module 104 can therefore be implemented in a device having low or medium processing capabilities.

The system 100 further comprises a first scoring module 105 arranged to receive as input a detected face of a target person in a frame, if said frame is accepted by the quality filtering module 104, and to determine a first score based on the detected face of the target person. The frame comprising a detected face of a target person is received from the face detection module 102. The frame can be identified with any identifier, such as an index. A rejection decision or acceptation decision can be received by the first scoring module 105 from the quality filtering module 104. If the frame is rejected, the first scoring module 105 fails to determine the first score, and merely discards the frame received from the face detection module 102. Alternatively, the accepted frames are received by the first scoring module 105 from the image quality filtering module 104 and the rejected frames are cancelled by the image quality filtering module 104, without being passed to the first scoring module 105. Therefore, the detected face of a target person is received from the face detection module 102, associated with an index, and it is discarded by the first scoring module 105 if no corresponding accepted frame has been received from the quality filtering module 104.

The first scoring module 105 may comprise at least one first model such as a first convolutional neuronal network, named CNN in what follows, arranged to determine at least one spatial feature of the detected face received as input, and the first score is determined based on the determined spatial feature. The at least one spatial feature preferably comprises a depth map of the detected face received as input, and the first score is determined based on the determined depth map. Indeed, when support media are used to show a picture of the genuine person or a video of a genuine person, the depth map determined based on the frame showing the support media is flat, meaning that the depths of the pixels of the frame are close to each other, or even equal to each other. On the contrary, if the target person is the live genuine person, the depth map shows different values of depths depending on the positions of the pixels. For example, for a live target person facing the frame capture module 101, the nose is closer from the camera than the cheeks, and therefore, pixels corresponding to the nose have different depth values compared to pixels corresponding to the cheeks.

CNNs are artificial neural networks that comprise filters or kernels organized in different layers, comprising an input layer, one or several hidden layers, and an output layer. Middle layers are called hidden because they are masked by an activation function, such as ReLU, and a final convolution. CNNs are obtained by machine learning using a set of data. The learning process can be supervised, meaning that each data of a training data set is associated with its output before being submitted to the CNN. The CNN learns from the difference between its output and the output associated with the data.

CNNs can be employed for classification problems, in particular for classifying inputs such as image frames. CNNs are well known and are not further described in the present description.

The first scoring module 105 therefore comprises a first CNN that is configured to determine at least one spatial feature. The first CNN may also determine the first score based on the spatial feature. Therefore, the first CNN may output a spatial feature, such as a depth map, or can further process this spatial feature, or several spatial features, to output the first score. When the first CNN outputs a spatial feature, or several spatial features, the first scoring module 105 can further comprise a trained classifier that is able to obtain the first score based on the spatial feature or the several spatial features. This trained classifier can be another CNN or a Support Vector Machine, SVM, or any other classifying tool.

As explained above, the at least one spatial feature may be a depth map. Alternatively, or in complement, the at least one spatial feature may be a skin texture feature or a light reflection feature. The first CNN may also output several spatial features, including the depth map, the skin texture feature and the light reflection feature, and these spatial features can be transmitted to a trained classifier of the first scoring module 105 to determine the first score. Alternatively, the first CNN determines several spatial features and further processes these spatial features to output the first score. According to another alternative, the first scoring module 105 comprises a first model for each spatial feature, for example one CNN for each spatial feature, meaning that each CNN is configured to output a spatial feature, which is passed to a common trained classifier that is able to determine the first score based on several spatial features.

In complement, the first scoring module 105 may be further configured to determine a temporal feature, and the first score is determined based on the at least one spatial feature and the temporal feature. For example, the temporal feature may be determined by the first CNN or by another dedicated first model, such as another CNN. If the temporal feature is determined by the first CNN, it can be output and passed to another classifier that determines the first score based on the at least one spatial feature and the temporal feature, or it can be further processed by the first CNN to output the first score based on the temporal feature and the at least one spatial feature. Therefore, the first scoring module 105 may comprise one or many sub-modules that are able to examine the temporal changes, skin texture and depth information. Alternatively, the first scoring module 105 can be one single module with a designed architecture that is able to control the impact of these multiple features on the final result (the first score).

The temporal feature may be determined based on at least two consecutive frames that are accepted by the quality filtering module 104. The temporal feature may be a movement feature, such as the movement of a specific pixel or zone, for example a nose movement, eye movement or any face part movement.

No restriction is attached to the data that is used to build and train the first CNN, the optional other CNNs and the optional trained classifier, and how this data is obtained. Preferably, the CNN is trained based on frames of live and spoof target users, in different conditions, with different head postures, for different types of attacks, different exposure levels and so on. When the learning process is supervised, the training data can be tagged with an information indicating whether the target person in the frame is spoof or live.

To summarize, the first score can be obtained :
- based on a single spatial feature such as the depth map;
- based on several spatial features, including the depth map, the skin texture feature and/or the light reflection feature; or
- based on one or several spatial features, as listed above, and based on a temporal feature.

It is to be noted that the first scoring module 105 may determine a first score for each frame of the series. In that case, the first scoring module 105 determines n first scores of index i, corresponding to each frame of index i of the n frames that have been accepted by the quality filtering module 104. Alternatively, the first scoring module 104 may determine a single first score for all the n frames of the series that have been accepted by the quality filtering module 104. In that case, the first CNN, and other optional CNN, may receive several detected faces in several frames as input, instead of a single frame with a detected face.

No restriction is attached to the format of the first score, which can be a binary information, indicating live or spoof. Alternatively, the first score comprises a statistical probability, expressed in percentages for example, that the target person is live or spoof.

The system 100 further comprises a second scoring module 106 arranged to receive as input at least one second quality feature among the quality features extracted from a frame by the frame quality module 103, if said frame is accepted by the quality filtering module 104, and to determine a second score based on the at least one second quality feature. The second quality feature may be one of the first quality features. However, in a preferred embodiment, the second quality feature is different from the at least one first quality feature used by the quality filtering module 104 to filter the frames.

The second scoring module 106 therefore receives at least one second quality feature from the frame quality module 104. The at least one quality feature may be associated with a frame index. In parallel, the second scoring module 106 may receive a rejection decision or acceptation decision associated with the frame index, from the quality filtering module 104. If the frame is rejected, the second scoring module 106 does not determine the first score, and merely discards the at least one quality feature received from the frame quality module 103. This enables to spare computational resources based on a simple filtering implemented by the quality filtering unit 104. Alternatively, the accepted frames are received by the second scoring module 106 from the image quality filtering module 104 and the rejected frames are cancelled by the image quality filtering module 104, without being passed to the second scoring module 106. Therefore, the quality features are received from the frame quality module 103, associated with an index, and they are discarded by the second scoring module 106 if no corresponding accepted frame has been received from the quality filtering module 104.

The second scoring module 106 preferably stores a second model arranged to attribute a second score based on at least one second quality feature among the one or several quality features obtained by the frame quality module 103. The second quality feature may be skin color naturalness, face posture and/or eyes contact. The at least one second quality feature may also, alternatively or in complement, comprise information related to the background of the frame, such as frame border or light reflection. In complement, the second model may receive several second quality features as inputs, and may output the second score. The second model stored by the second scoring module 106 may be obtained by machine learning based on a set of training data. The learning process may be supervised for example. The second model stored by the second scoring module 106 may for example be a second CNN receiving one or several quality features as input and outputting the second score. Alternatively, the model stored by the second scoring module 106 may be implemented by a SVM or a tree-based classifier and may be determined during a preliminary phase as described hereafter.

The second scoring module 106 preferably allows to target specific attacks that cannot be detected by the first scoring module 105. The first and second scoring modules 105 and 106 can therefore be regarded as complementary. As it will be understood from the description that follows, according to some embodiments, the second scoring module 106 may be specifically built to detect attacks in a space (a set of possible frames) where the first scoring module 105 is not able to detect attacks.

As with the first score, no restriction is attached to the format of the second score, which can be a binary information, indicating live or spoof. In complement, the second score comprises a statistical probability, expressed in percentages for example, that the target person is live or spoof. Alternatively, the first and second scores may be any numerical value or code.

The system 100 further comprises a fusion module 107, which is configured for attributing a final score representative of liveness of the target person based at least on the first score and the second score. The fusion module 107 may also store a fusion model obtained by machine learning, which is trained based on a set of training data or corresponding to a classifier that can be selected among several candidates as it will be better understood from the description that follows.

According to some embodiments, the fusion model takes the first score and the second score as inputs, to produce the final score indicating if the target person in the series of frames is live or spoof, or indicating a probability that the target person is live or spoof. The fusion model may be optimized based on the following error rates:
- Attack Presentation Classification Error Rate, named APCER, which is the proportion of attack presentations using the same presentation attack instrument incorrectly classified as live target person (or bona fide presentation) in a specific scenario;
- Bona fide Presentation Classification Error Rate, named BPCER, which is the proportion of bona fide presentations (live target person) incorrectly classified as attack presentations (spoof) in a specific scenario.

Two different embodiments of preliminary phases for determining the second model of the second scoring module 106 and a fusion model of the fusion module 107 are described hereafter. They differ by the way the fusion model and the second model are built, as it will be understood from what follows. In both these embodiments, the fusion model of the fusion module 107 and the second model of the second scoring module 106 are built together, while the first scoring model or models of the first scoring module 106 is known. However, according to alternative embodiments that are not further described hereafter, the first scoring model and the second scoring model are built first, and the fusion model is built and optimized assuming the first and second scoring models that have been previously built.

The following notations are used hereafter:
x is a frame, xᵢ being the frame of index i, and X being a dataset of M training frames, where X=[x₁, X₂, xᵢ, x_{M}];
s1 is the first score issued by the first scoring module 105, as described previously, where s1=f(x), f being obtained by machine learning as explained above;
s2 is the second score issued by the second scoring module 106, where s2=g(h(x)), where h() is a quality feature extractor that enables to extract the second quality features used by the frame quality module 103;
sd is the final score obtained by the fusion module 107, where sd=d(s1;s2)=d(f(x), g(h(x));

According to a first embodiment, the function d is fixed or predetermined, and functions g and h are optimized, so that g(h(X)) has a BPCER that is lower than a maximum BPCER value, based on a first dataset, which is a dataset for which the first scoring module is unable to identify an attack. This enables to train the second scoring module 106 on a set of frames (a space) in which the first scoring module 105 is not relevant.

To obtain the first dataset, let us consider Ω(f(x), t) that is a decision function that returns 0 or 1 for spoof or live, respectively. If f(x)<t, then Ω=0. If f(x) ≥ t, then Ω=1. t is therefore a decision threshold, being a numerical value for example. Ω* indicates a case where Ω=1, where the ground truth Ω_{GT}=0. The first dataset therefore comprises frames X* for which Ω(f(X*, t)= Ω*. According to the first embodiment, t is optimized with g() and h() so that Ω*, in order to reduce APCER and BPCER of the first scoring module 105, to optimize liveness detection by the first scoring module 105.

Optimized value t and optimized functions g() and h() are noted t_{best}, g_{best} and h_{best} hereafter.

The following set of instructions may be implemented to determine t_{best}, g_{best} and h_{best}, N1 being the number of t value candidates, N2 being the number of g() function candidates, and N3 being the number of h() function candidates:

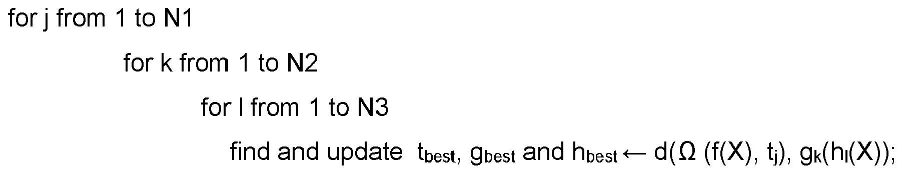

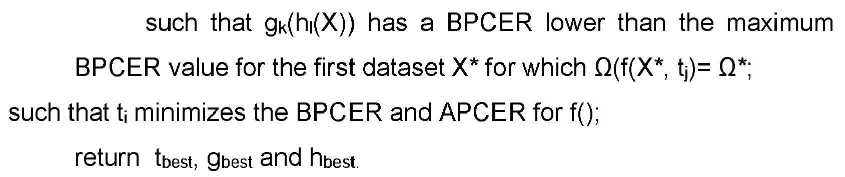

The selection of t_{best}, g_{best} and h_{best} is based on other accuracy metrics, which are not further described in the present description and which depends on criteria that can be determined by the person skilled in the art.

Once optimized, g() and h() are then implemented in the second scoring module 106 and d() is implemented in the fusion module 107.

Finally, another threshold may be adjusted to compare with the final score returned by function (d) and to decide whether the target person is live or spoof, for example in the decision module 108.

According to a second embodiment, a number M1 of g() function candidates and M2 of h() function candidates are predefined to determine a bottom classifier (the second scoring module 106), and M3 candidates for the d() function are candidates, contrary to the first embodiment where d is fixed. d() can therefore be considered as a top classifier, implemented in the fusion module 107. Finally, a threshold may be adjusted to compare with the final score, for example in the decision module 108.

The following set of instructions may be implemented to determine d_{best}, g_{best} and h_{best},

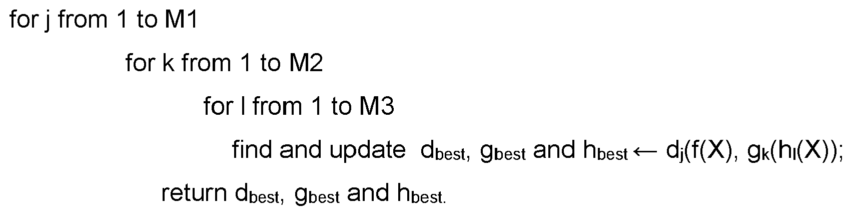

The selection of d_{best}, g_{best} and h_{best} is based on accuracy metrics, which are not further described in the present description and which depends on criteria that can be determined by the person skilled in the art. The accuracy metrics may be to minimize the APCER and BPCER values for the different combinations of candidates d(), g() and h().

The system 100 may optionally comprise a decision module 108, which is arranged to classify the target person as spoof or live, based on the final score issued by the fusion module 107. The decision module 108 may alternatively be outside the liveness determination system 100, and may be part of an identification system able to identify the target person.

According to some embodiments, a first device 110 comprises the face detection module 102, the frame quality module 103 and the quality filtering module 104.

The first device 110 can be located at an end user site, and may communicate with the first scoring unit 105 and the second scoring unit 106 via a network, not shown on Figure 1. The first scoring 105, the second scoring unit 106, the fusion module 107 and the decision module 108 may also be grouped in a second device 111. Alternatively, the decision module 108 may be outside of the second device 111. The second device 111 can be located on a server side, which allows to mutualise the modules 105 to 108 between different end user sites, each end user site having its own first device 110 and its own frame capture module 101. In addition, servers may be provided with high calculation capacities, which makes it advantageous to be centralized and shared between several end user sites. This also allows complex models to be run in the first scoring module 105, the second scoring module 106 and the fusion module 107.

Alternatively, the face detection module 102, the frame quality module 103, the quality filtering module 104, the first scoring module 105, the second scoring module 106 and the fusion module 107 may be together part of a unique device 120. The unique device 120 may further comprise the frame capturing module 101 and/or the decision module 108.

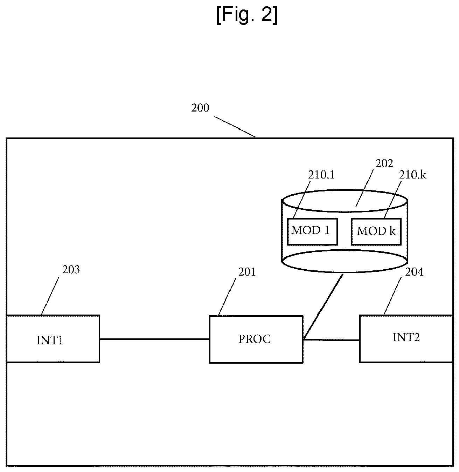

Figure 2 shows a detailed structure of a module 200 of the system 100 according to some embodiments of the invention.

In particular, the structure of the module 200 may be used for the first quality filtering module 104, the first scoring module 105, the second scoring module 106 and/or the fusion module 107.

The module 200 comprises a processor 201, a memory 202 storing one or several models 210.1 to 210.k, k being an integer equal to or greater than 1, a receiving interface 203 and a transmitting interface 204.

The processor 201 may comprise one or multiple microprocessors, a Central Processing Unit (CPU), on a single Integrated Circuit (IC) or several IC chips.

No restriction is attached to the memory 202, which may be any non-transient, tangible form of memory. For example, it can comprise ROM, RAM, EEPROM and/or flash memory. The processor 201 may be programmable and may be configured to execute instructions that are stored in its internal memory or to execute a model that is stored in the memory 202 of the module.

The memory 202 may store one or several models, which can be any of the models that have been previously described.

The module 200 further comprises a receiving interface 203 and a transmitting interface 204. The receiving interface 203 is configured to receive data or information from one or several other modules of the system 100, whereas the transmitting interface 204 is configured for transmitting data or information to one or several other modules of the system 100. The receiving interface 203 and 204 may be a single bidirectional communication interface.

No restriction is attached to the interfaces 203 and 204, which may use any wired or wireless communication protocol. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC. The interfaces 203 and 204 may comprise hardware (an Ethernet port, a wireless radio), software (drivers, firmware application) or a combination thereof to enable communications to and from the module 200.

The quality filtering module 104 may have the structure of the module 200, and may store one model 210.1, which is a simple set of rules to decide to accept or reject a frame, as explained above. The receiving interface 203 is configured to receive data/information from the face detection module 102 and from the frame quality module 103. The transmitting interface 204 is configured to transmit the rejection or acceptation decisions, in association with frame index, to the first scoring module 105 and to the second scoring module 106.

The first scoring module 105 may have the structure of the module 200, and may store one or several first models 210.1 to 210.k. As explained above, it can store one first model for each spatial and/or temporal feature to be determined by the first scoring module 105, and another first model to determine the first score based on the at least one spatial feature, and optionally the temporal feature. The receiving interface 203 is configured to receive data/information from the quality filtering unit 104 and from the face detection module 102. The transmitting interface 204 is configured to transmit the first score to the fusion module 107.

The second scoring module 106 may also have the structure of the module 200, and may store a second model 210.1 arranged for determining the second score based on at least one quality feature. The receiving interface 203 is configured to receive data/information from the quality filtering unit 104 and from the frame quality module 103. The transmitting interface 204 is configured to transmit the second score to the fusion module 107.

The fusion module 107 may also have the structure of the module 200, and may store one fusion model i. The receiving interface 203 is configured to receive the first score from the first scoring module 105 and the second score from the second scoring module 106. The transmitting interface 204 is configured to transmit the final score to the decision module 108.

Alternatively, the first device 110 or the second device 111 may have the structure of the module 200. In that case, the module 200 is configured to perform all the functions of the modules of the first device 110 or all the functions of the modules of the second device 111, and the processor 201 is multipurpose. Alternatively, the unique device 120 may have the structure of the module 200. In that case, the module 200 is configured to perform all the functions of the modules of the unique device 120, and the processor 201 may be multipurpose.

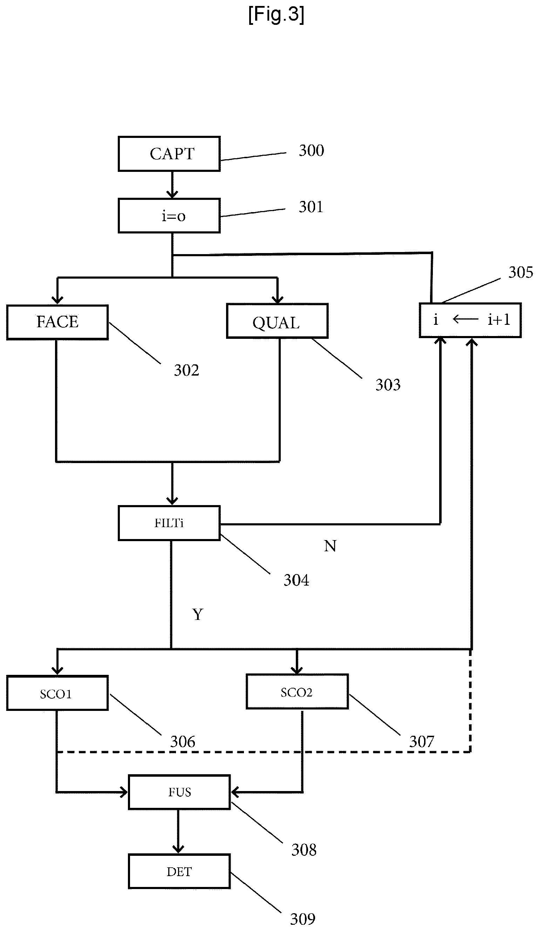

Figure 3 shows the steps of a method for determining liveness of a target person according to some embodiments of the invention.

The method can be carried out by the system illustrated and described above referring to Figure 1.

At step 300, a series of frames is captured by the frame capture module 101. The frames of the series may be accumulated during step 300 or can be processed on the fly each time a frame is acquired by the frame capture module 101.

At step 301, each frame of the series may be attributed an index, noted i, initialized to 0 or 1, and which may vary between its initial value and N or N-1, N being the number of frames in the series.

At step 302, the face detection module 102 detects the face of a target person in the frame of index i, as explained above.

At step 303, which may be performed in parallel to step 302, the frame quality module 103 determines at least one quality feature of the frame of index i.

At step 304, the quality filtering module 104 accepts or rejects the frame of index i, based on the comparison between at least one predefined capture condition and at least one first quality feature among the at least one quality feature of the frame extracted by the frame quality module 103, as described above.

In the event where the frame of index i is rejected, the frame of index i+1 is retrieved, if i+1 is lower than N (or N-1 if the initial value is 0), and the method goes back to steps 302 and 303 for the frame of index i+1. If i+1 is equal to N (or N-1 if the initial value is 0), the method ends.

In the event where the frame of index i is accepted, the method goes to steps 306 and 307.

At step 306, the first scoring module 105 determines a first score based on the detected face of the target person, as explained above.

At step 307, the second scoring module 106 determines a second score based on at least one second quality feature among the one or several second quality features acquired by the frame quality module 103.

As explained above, the first score and the second score may be calculated based on all the accepted frames of the series. In that case, the method also goes to step 305 before steps 306 and 307 are performed. The first scoring module and the second scoring module therefore accumulates the frames that have been accepted by the quality filtering module 104.

Alternatively, the first score and the second score are calculated for each frame. In that case, the method goes to step 305 after steps 306 and 307 are performed.

The first and second scores are then used by the fusion module 107 to determine the final score at step 308. A unique first score calculated for the whole series and a unique second score calculated for the whole series may be used. Alternatively, the fusion module 107 uses a first score and a second score for each accepted frame i of the series.

The decision module 108 then classifies the target person as spoof or live, based on the final score issued by the fusion module 107, at step 309.

The method may also comprise a preliminary phase for determining the model or models stored by the first scoring module 105, named first model or first models, for determining the second model (the pair of functions g() and h()) stored in the second scoring module 106, and for determining the fusion model (the function d()) stored in the fusion module 107, according to the first and second embodiments described above.

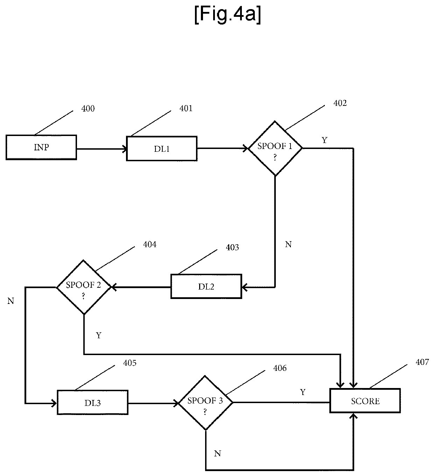

Figure 4a shows sub-steps that are performed by the first scoring module 105 according to some embodiments of the invention.

Together, the sub-steps described hereafter may form step 306 described above.

At step 400, the first scoring module 105 receives as input a detected face in a frame from the face detection module 102 and an acceptation decision corresponding to this frame from the quality filtering module 104. The situation where a rejection decision is received from the quality filtering module 104 is not described as the detected face of the frame is merely discarded, or the frame has already been discarded by the quality filtering module 104.

At step 401, a first first model is applied to the detected face of the frame, to determine at least one first spatial feature. For example, two first spatial features may be determined by the first model, such as a depth map and a light reflection feature.

At step 402, a classifier of the first scoring module 105 determines whether the target person is live or spoof based on the at least one first spatial feature. If the target person is determined as spoof, or if a first probability that the target person is spoof is above a given first threshold, the first score may be determined at step 407 based on at least one first spatial feature, thereby indicating that the target person is spoof, or indicating the associated first probability.

If not, i.e. if the target person is determined as live, or if the first probability that the target person is spoof is below the first threshold, the method goes to step 403.

At step 403, a second first model is applied to the detected face of the frame, to determine at least a temporal feature. To determine the temporal feature, the detected faces in two consecutive frames may be used (such as the previous accepted frame or the next accepted frame in addition to the current accepted frame i).

The temporal feature is then passed to a classifier of the first scoring module 105 at step 404 to determine whether the target person is live or spoof based on the at least one temporal feature.

If the classifier determines that the target person is spoof, or if a second probability that the target person is spoof is above a given second threshold, the first score may be determined based on the at least one first spatial feature and the at least one temporal feature, thereby indicating that the target person is spoof, or indicating an associated probability determined based on the at least one first spatial feature and the at least one temporal feature (or based on the first and second probabilities).

If not, i.e. if the target person is determined as live, or if the second probability that the target person is below the second threshold, the method goes to step 405.

At step 405, a third first model is applied to the detected face of the frame to determine at least a second spatial feature. The second spatial feature maybe a skin texture feature.

The second spatial feature is then passed to a classifier of the first scoring module 105 to determine whether the target person is live or spoof based on the at least one second spatial feature.

If the classifier determines that the target person is spoof, or if a third probability that the target person is spoof is above a given third threshold, the first score may be determined based on the at least one first spatial feature, the at least one second spatial feature and the at least one temporal feature, thereby indicating that the target person is spoof, or indicating an associated probability determined based on the at least one first spatial feature, the at least one second spatial feature and the at least one temporal feature (or based on the first, second and third probabilities).

If not, i.e. if the target person is determined as live, or if the third probability that the target person is below the third threshold, the method goes to step 407, and the first score is determined based on the at least one first spatial feature, the at least one second spatial feature and the at least one temporal feature (or based on the first, second and third probabilities).

Therefore according to the embodiments of figure 4a, different first models are applied in sequence. This allows to apply a hierarchy between the different first models. For example, the depth map can be used firstly to identify if a target person is spoof. If so, it may not be necessary to apply the second and third first models and it allows to save computational resources.

No restriction is attached to the order in which the first, second and third first models are applied. Also, no restriction is attached to the number of first models applied in sequence. Two first models or more than three models may for example be applied.

Also, as an alternative, each first model may output a respective score (a binary result such as spoof or live, and optionally an associated probability), instead of temporal or spatial features, and in that case, additional classifiers are not required. Step 402 is therefore applied by the first first model, step 404 is applied by the second first model and step 406 is applied by the third first model.

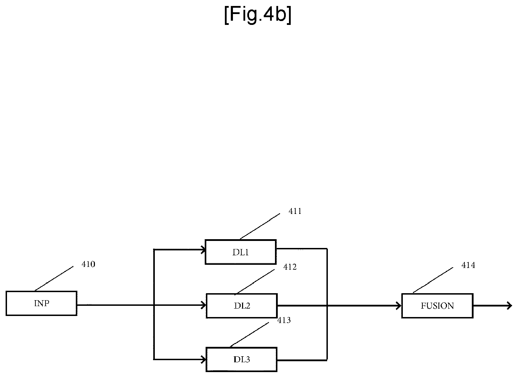

Figure 4b shows the sub-steps performed by the first scoring module according to other embodiments of the invention.

Together, the sub-steps described hereafter form step 306 described above.

At step 410, the first scoring module 105 receives as input a detected face in a frame from the face detection module 102 and an acceptation decision corresponding to this frame from the quality filtering module 104. The situation where a rejection decision is received from the quality filtering module 104 is not described as the detected face of the frame is merely discarded.

Steps 411, 412 and 413 are similar to steps 401, 403 and 405 respectively, but are performed in parallel instead of sequentially.

Therefore, at step 411, a first first model produces at least one first spatial feature. At step 412, a second first model produces at least one temporal feature and at step 413, a third first model produces at least one second spatial feature.

At step 414, the at least one spatial feature, the at least one temporal feature and the at least one second spatial feature are submitted to a fusion model configured to determine the first score based on these features. The fusion model may be built by machine learning. It can be a SVM or a CNN for example.

Alternatively, the first first model produces a first spatial score based on the at least one first spatial feature, the second first model produces a temporal score based on the at least one temporal feature and the third first model produces a second spatial score based on the at least one second spatial feature.

The example embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

**1.** System for determining liveness of a target person comprising
- a frame capture module (101) configured to acquire a series of frames ;
- a face detection module (102) configured to detect a face of a target person in each of the frames of the series acquired by the frame capture module;
- a frame quality module (103) configured to determine at least one quality feature from each frame of the series acquired by the frame capture module ;
- a quality filtering module (104) configured to reject or accept each frame of the series based on a comparison between at least one predefined capture condition and at least a first quality feature among the at least one quality feature of the frame extracted by the frame quality module ;
- a first scoring module (105) arranged to receive as input a detected face of a target person in a frame, if said frame is accepted by the quality filtering module, and to determine a first score based on the detected face of the target person;
- a second scoring module (106) arranged to receive as input the at least one quality feature extracted from a frame, if said frame is accepted by the quality filtering module, and to determine a second score based on at least one second quality feature among the at least one quality feature of the frame extracted by the frame quality module ;
- a fusion module (107) configured for attributing a final score representative of liveness of the target person based at least on the first score and the second score.

**2.** System according to claim 1, wherein the first scoring module (105) comprises a first convolutional neuronal network arranged to determine at least one spatial feature of the detected face received as input, and wherein the first score is determined based on the determined spatial feature.

**3.** System according to claim 2, wherein the at least one spatial feature comprises a depth map of the detected face received as input, and wherein the first score is determined based on the determined depth map.

**4.** System according to claim 3, wherein the at least one spatial feature further comprises a light reflection feature and/or a skin texture feature, and wherein the first score is further determined based on the light reflection feature and/or the skin texture feature.

**5.** System according to one of claims 2 to 4, wherein the first scoring module (106) is further arranged to determine at least one temporal feature of the detected face in at least two consecutive frames, and wherein the first score is determined based on the determined spatial feature and based on the determined temporal feature.

**6.** System according to one of claims 1 to 5, wherein the at least one predefined capture condition comprises an image sharpness threshold, a gray scale density threshold, a face visibility threshold and/or a light exposure threshold.

**7.** System according to one of the preceding claims, wherein the second scoring module (106) comprises a classifier (210.1) arranged to determine the second score based on second quality features comprising a natural skin color, a face posture, eyes contact, frame border detection and/or light reflection.

**8.** System according to one of the preceding claims, wherein the face detection module (102), the frame quality module (103) and the quality filtering module (104) are comprised in a first device (110), wherein the first device is arranged to communicate with the first and second scoring modules via a network.

**9.** System according to claim 8, wherein the quality filtering module (104) is arranged to provide feedback information based on the comparison between the at least one predefined capture condition and the at least one quality feature of the frame extracted by the frame quality module (103).

**10.** System according to claim 8 or 9, wherein the quality filtering module (104) is arranged to control the frame capture module based on the comparison between the at least one predefined capture condition and the at least one first quality feature of the frame extracted by the frame quality module (103).

**10.** System according to one of the preceding claims, wherein the first score is determined for each frame and the second score is determined for each frame, and wherein the final score is determined based on the first scores and the second scores determined for the frames of the series accepted by the quality filtering module (104).

**11.** System according to one of claims 1 to 9, wherein the first score is determined based on the detected face of the target person in the frames of the series accepted by the quality filtering module (104), wherein the second score is determined based on the second quality features of the frames of the series accepted by the quality filtering module.

**12.** Method for determining liveness of a target person comprising
- acquiring (301) a series of frames ;
- detecting (302) a face of a target person in each of the frames of the series acquired;
- determining (303) at least one quality feature from each frame of the series ;
- rejecting or accepting (304) each frame of the series based on a comparison between at least one predefined capture condition and at least a first quality feature among the at least one quality feature of the frame extracted by the frame quality module ;
- applying (306) at least one first model to a detected face of a target person in a frame, if said frame is accepted by the quality filtering module, to determine a first score based on the detected face of the target person;
- applying (307) a second model to the at least one quality feature extracted from a frame, if said frame is accepted by the quality filtering module, to determine a second score based on at least one second quality feature among the at least one quality feature of the frame extracted by the frame quality module ;
- applying (308) a fusion model to the first score and the second score to attribute a final score representative of liveness of the target person.

**13.** Method according to claim 12, wherein, during the preliminary phase:
- setting the fusion model;
- defining a decision function determining, based on a threshold and the first score, a decision indicating whether a target person in a series of frame is spoof or live; then
- setting a value for the threshold; then
- selecting the second model among several candidates based on frames for which the decision function wrongly determines that the target person is live and to minimize an error value of the second model; then
- updating the value of the threshold based on several candidates to minimize at least one error value of the fusion model.

**14.** Method according to claim 12, wherein, during a preliminary phase, the first model is obtained by machine learning, and wherein the second model and the fusion model are selected among several candidates based on the first model and based on accuracy metrics.
